# EUROPÄISCHE PATENTSCHRIFT

(11) **EP 2 181 133 B1**
(45) Veröffentlichungstag und Bekanntmachung des Hinweises auf die Patenterteilung: **26.10.2011**
(21) Anmeldenummer: 07723624.8
(22) Anmeldetag: 27.03.2007
(51) Int. Cl.: C08G 18/08, C08G 18/10, C08G 18/12, C09D 175/00, C09D 175/02, C09D 175/04, C08G 18/44, C08G 18/28, C08G 18/42, C08J 9/30, C08G 18/82

(54) **MIKROPORÖSE BESCHICHTUNG AUF BASIS VON POLYURETHAN-POLYHARNSTOFF**
MICROPOROUS COATING BASED ON POLYURETHANE POLYUREA
REVÊTEMENT MICRO-POREUX À BASE DE POLYURÉTHANE-POLYURÉE

(30) Priorität: 08.04.2006 DE 102006016638
(43) Veröffentlichungstag der Anmeldung: 05.05.2010
(73) Patentinhaber: Bayer MaterialScience AG, 51368 Leverkusen (DE)
(72) Erfinder: RISCHE, Thorsten, 59423 Unna (DE); CASSELMANN, Holger, 51519 Odenthal (DE); FELLER, Thomas, 42659 Solingen (DE); HECKES, Michael, 47800 Krefeld (DE); DÖRR, Sebastian, 40597 Düsseldorf (DE); RUDHARDT, Daniel, 50827 Köln (DE); MICHAELIS, Thomas, 51375 Leverkusen (DE)
(86) Internationale Anmeldenummer: PCT/EP2007/002678
(87) Internationale Veröffentlichungsnummer: WO 2007/115679

(56) Entgegenhaltungen:
- DE-A1- 10 300 478
- US-A- 4 086 193
- US-A- 4 801 621

## Beschreibung

Die Erfindung betrifft neue mikroporöse Beschichtungen sowie ein Verfahren zur Herstellung von mikroporösen Beschichtungen.

Im Bereich der Textilbeschichtung haben Polyurethane in ihren verschiedenen Applikationsformen - Lösung, High Solid, wässrige Dispersionen - traditionell einen hohen Stellenwert. Dabei geht der Trend vor allem im Bereich der Beschichtungen seit Jahren wegen der ökologischen Vorteile immer stärker weg von den Lösemittelsystemen hin zu High Solids und insbesondere zu wässrigen Systemen.

Etwas anders ist die Situation noch bei Polyurethan-Kunstledern. Diese mikropösen Beschichtungen werden nach dem heutigen Stand der Technik immer noch zumeist nach dem sogenannten Bad-Koagulationsprozess hergestellt.

Bei dem heute vorrangig eingesetzten Prozess der Badkoagulation werden Textilien mit in organischen Lösemitteln (z.B. Dimethylformamid) gelösten Polyurethanen beschichtet oder getränkt. Die Koagulation erfolgt unmittelbar anschließend durch Eintauchen in ein Wasserbad. Die resultierenden Beschichtungen zeichnen sich durch ihre Weichheit und gute Wasserdampfdurchlässigkeit aus. Das Verfahren ist wegen der spezifischen Eigenschaften des organischen Lösemittels (Lösevermögen, Mischbarkeit mit Wasser, etc.) an die Verwendung dieses Lösemittels gebunden.

Nachteile dieses Verfahrens bestehen insbesondere in den notwendigen und aufwendigen Maßnahmen zur sicheren Handhabung, zur Aufbereitung und Wiederverwertung der sehr großen Lösemittelmengen.

Bei Alternativmethoden wie der Verdampfungskoagulation, die auf der Verwendung eines flüchtigen Lösemittels und eines weniger flüchtigen Nichtlösers für das Bindemittel beruht, entweicht zunächst bei schonendem Erwärmen bevorzugt das Lösungsmittel, so dass der Binder durch den stetig steigenden Anteil an Nichtlöser koaguliert; nachteilig erweist sich neben dem ebenfalls notwendigen Einsatz großer Lösemittelmengen der erforderliche enorme technische Aufwand und die durch die Prozeßparameter sehr eingeschränkten Optimierungsmöglichkeiten.

Die ebenfalls angewendete Salz-, Säure- oder Elektrolyt-Koagulation erfolgt durch Eintauchen des beschichteten Substrats oder, wie im Falle von Handschuhen, der zunächst in die Dispersion getauchten Form, in eine konzentrierte Salzlösung oder in mit Säure versetztes Wasser o. ä., wobei das Bindemittel durch den hohen Elektrolytgehalt koaguliert. Nachteile dieses Verfahrens bestehen in der komplizierten technischen Durchführung und vor allem in dem hohen Anfall belasteter Abwässer.

Die Prepolymerisatmethode, wonach ein mit Isocyanat-Prepolymerisat beschichtetes Substrat in Wasser getaucht wird und dann unter CO₂-Abspaltung ein Polyharnstoff in poriger Struktur anfällt, erweist sich u. a. aufgrund der sehr hohen Reaktivität der Formulierungen und den damit verbundenen kurzen Verarbeitungszeiten als nachteiliges Verfahren.

Die für wärmesensibel eingestellte nicht nachvemetzbare Bindemittel mögliche Koagulation durch Temperaturerhöhung führt oft zu inakzeptablen Beschichtungsergebnissen.

Die DE-A 19 856 412 beschreibt ein Verfahren zur wässrigen Koagulation basierend auf nachvemetzbaren wässrigen Polyurethandispersionen, das ohne oder nur mit einem geringen Gehalt an organischem Lösemittel und ohne Verwendung von Salz-, Säure- o.a. Elektroytbädern auskommt und insgesamt einen einfachen Prozess darstellt. Das beschriebene Verfahren eignet sich insbesondere zur Beschichtung von nicht mikroporösen Kompaktfilmen in geringer Schichtdicke.

Die DE-A 10 300 478 beschreibt ein vorrangig auf den wässrigen nachvernetzbaren Polyurethandispersionen der DE-A 19 856 412 basierendes Verfahren, nach dem diese aufgeschäumt auf ein textiles Substrat aufgetragen werden und dort durch spezielle Koagulantien thermisch bei Temperaturen von 100 °C bis 110 °C koaguliert werden und sich zur Herstellung von Kompaktbeschichtungen, die z.B. als bedrucktes Kunstwildleder im Automobil, auf Möbeln oder im Bekleidungsbereich Verwendungen finden, eingesetzt werden.

Die Erzeugung von mikroporösen Beschichtungen mit hohen Schichtauflagen durch wässrige Koagulation ist nach dem heutigen Stand der Technik auf Basis der ökologisch unbedenklichen wässrigen Polyurethanpolyharnstoff Dispersionen (PUR-Dispersionen) noch nicht befriedigend gelöst und daher Aufgabe der vorliegenden Erfindung.

Die Zugabe von üblichen Koagulantien zu PUR-Dispersionen führt stets zur spontanen Ausfällung des Polyurethans und ist deshalb keine geeignete Methode zur Herstellung von streichfähigen Pasten.

Es wurde nun überraschend gefunden, dass es mit speziellen PUR-Dispersionen (I) in Kombination mit kationischen Koagulantien (II) gelingt, streichfähige Pasten zu erhalten, wobei die Koagulantien (II) mindestens zwei kationische Gruppen enthaltende organische Verbindungen sind.

Es wurde außerdem gefunden, dass sich mikroporöse Beschichtungen mit hohen Schichtauflagen durch ein neues Verfahren beinhaltend folgende Prozessschritte herstellen lassen:
A. Herstellung einer streichfähigen Beschichtungsmittelzusammensetzung (1), enthaltend eine wässrige anionisch hydrophilierte Polyurethanpolyharnstoff-Dispersion (I) und ein kationisches Koagulanz (II), wobei das kationische Koagulanz (II) eine mindestens zwei kationische Gruppen enthaltende organische Verbindung ist.
B. Aufschäumen von (1) unter gleichzeitiger zumindest partieller Koagulation des Schaums bei niedriger Temperatur
C. Applikation der geschäumten und zumindest partiell koagulierten Zusammensetzung (1) auf einen textilen Träger
D. Trocknung und gegebenenfalls
E. Fixierung der Schaummatrix durch einen weiteren Trockenschritt bei höherer Temperatur

Gegenstand der vorliegenden Erfindung ist auch ein Verfahren zur Herstellung der streichfähigen Beschichtungszusammensetzung (1), dadurch gekennzeichnet, dass diese die Komponenten ausgewählt aus der Gruppe der
I.) wässrigen anionisch hydrophilierten Polyurethan-Dispersionen mit einem Gehalt an -COO⁻, -SO₃⁻ oder PO₃²⁻ Gruppen zwischen 0,1 bis 15 Milliequivalent pro 100 g Festharz;
II.) kationischen Koagulantien, bevorzugt enthaltend Struktureinheiten gemäß allgemeiner Formel (2), besonders bevorzugt Struktureinheiten gemäß allgemeiner Formel (1) und allgemeiner Formel (2), 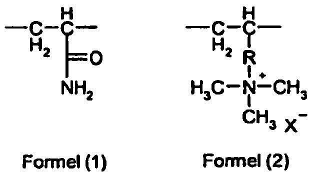 wobei
   - R: C=O, -COO(CH₂)₂- oder -COO(CH₂)₃- und
   - X⁻: ein Halogenidion, bevorzugt Chlorid ist; wobei die kationischen Koagulantien (II) mindestens zwei kationische Gruppen enthaltende organische Verbindungen sind,
III.) Schaummittel;
IV.) Vernetzer sowie
V.) gegebenenfalls Verdicker
enthält und diese vor dem Schritt B.) nach bekannten Mischverfahren homogen in beliebiger Reihenfolge zusammengemischt werden.

Die in den erfindungsgemäßen Zusammensetzungen enthaltenen wässrigen, anionisch hydrophilierten Polyurethan-Dispersionen (I) sind erhältlich, indem
A) isocyanatfunktionelle Prepolymere aus
   A1) organischen Polyisocyanaten
   A2) polymeren Polyolen mit zahlenmittleren Molekulargewichten von 400 bis 8000 g/mol, vorzugsweise 400 bis 6000 g/mol und besonders bevorzugt von 600 bis 3000 g/mol, und OH-Funktionalitäten von 1,5 bis 6, bevorzugt 1,8 bis 3, besonders bevorzugt von 1,9 bis 2,1, und
   A3) gegebenenfalls hydroxyfunktionellen Verbindungen mit Molekulargewichten von 32 bis 400 g/mol und
   A4) gegebenenfalls isocyanatreaktiven, anionischen oder potentiell anionischen und/oder gegebenenfalls nichtionischen Hydrophilierungsmitteln,
   hergestellt werden,
B) dessen freie NCO-Gruppen dann ganz oder teilweise
   B1) gegebenenfalls mit aminofunktionellen Verbindungen mit Molekulargewichten von 32 bis 400 g/mol und/oder
   B2) isocyanatreaktiven, bevorzugt aminofunktionellen, anionischen oder potentiell anionischen Hydrophilierungsmitteln
   unter Kettenverlängerung umgesetzt werden und die so erhaltenen Prepolymere vor, während oder nach Schritt B) in Wasser dispergiert werden, wobei gegebenenfalls enthaltene, potentiell ionische Gruppen durch teilweise oder vollständige Umsetzung mit einem Neutralisationsmittel in die ionische Form überführt werden.

Um eine anionische Hydrophilierung zu erreichen müssen in A4) und/oder B2) Hydrophilierungsmittel eingesetzt werden, die wenigstens eine gegenüber NCO-Gruppen reaktive Gruppe wie Amino-, Hydroxy- oder Thiolgruppen aufweisen und darüber hinaus -COO⁻ oder - SO₃⁻ oder -PO₃²⁻ als anionische bzw. deren ganz oder teilweise protonierte Säureformen als potentiell anionische Gruppen aufweisen.

Bevorzugte wässrige, anionische Polyurethan-Dispersionen (I) haben einen niedrigen Grad an hydrophilen anionischen Gruppen, bevorzugt von 0,1 bis 15 Milliequivalenten pro 100 g Festharz.

Um eine gute Sedimentationsstabilität zu erreichen, liegt die zahlenmittlere Teilchengröße der Polyurethan-Dispersionen I.) bevorzugt bei weniger als 750 nm, besonders bevorzugt bei weniger als 500 nm und ganz besonders bevorzugt weniger als 400 nm, bestimmt mittels Laserkorrelations-Spektroskopie.

Das Verhältnis von NCO-Gruppen der Verbindungen aus Komponente A1) zu NCOreaktiven Gruppen wie Amino-, Hydroxy- oder Thiolgruppen der Verbindungen der Komponenten A2) bis A4) beträgt bei der Herstellung des NCO-funktionellen Prepolymers 1,05 bis 3,5, bevorzugt 1,2 bis 3,0 besonders bevorzugt 1,3 bis 2,5.

Die aminofunktionellen Verbindungen in Stufe B) werden in solch einer Menge eingesetzt, dass das Äquivalentverhältnis von isocyanatreaktiven Aminogruppen dieser Verbindungen zu den freien Isocyanatgruppen des Prepolymers 40 bis 150 %, bevorzugt zwischen 50 bis 125 %, besonders bevorzugt zwischen 60 bis 120 % beträgt.

Geeignete Polyisocyanate der Komponente A1) sind die dem Fachmann an sich bekannten aromatischen, araliphatischen, aliphatischen oder cycloaliphatischen Polyisocyanate einer NCO-Funktionalität von 2.

Beispiele solcher geeigneten Polyisocyanate sind 1,4-Butylendiisocyanat, 1,6-Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat, 1,5-Naphthylendiisocyanat, 2,2'-und/oder 2,4'- und/oder 4,4'-Diphenylmethandiisocyanat, 1,3- und/oder 1,4-Bis-(2-isocyanato-prop-2-yl)-benzol (TMXDI), 1,3-Bis(isocyanatomethyl)benzol (XDI), sowie Alkyl-2,6-diisocyanatohexanoate (Lysindiisocyanate) mit C1-C8-Alkylgruppen.

Neben den vorstehend genannten Polyisocyanaten können anteilig auch modifizierte Diisocyanate mit Uretdion-, Isocyanurat-, Urethan-, Allophanat-, Biuret-, Iminooxadiazindion- und/oder Oxadiazintrionstruktur sowie nicht-modifiziertes Polyisocyanat mit mehr als 2 NCO-Gruppen pro Molekül sei z.B. 4-Isocyanatomethyl-1,8-octandiisocyanat (Nonantriisocyanat) oder Triphenylmethan-4,4',4"-triisocyanat mit eingesetzt werden.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen und einer mittleren NCO-Funktionalität der Mischung von 2 bis 4, bevorzugt 2 bis 2,6 und besonders bevorzugt 2 bis 2,4.

Besonders bevorzugt werden in A1 1,6-Hexamethylendiisocyanat, Isophorondiisocyanat, die isomeren Bis(4,4'-isocyanatocyclohexyl)methane, sowie deren Mischungen eingesetzt.

In A2) werden polymere Polyole mit einem zahlenmittleren Molekulargewicht Mₙ von 400 bis 8000 g/mol, bevorzugt von 400 bis 6000 g/mol und besonders bevorzugt von 600 bis 3000 g/mol eingesetzt. Diese weisen bevorzugt eine OH-Funktionalität von 1,5 bis 6, besonders bevorzugt von 1,8 bis 3, ganz besonders bevorzugt von 1,9 bis 2,1 auf.

Solche polymeren Polyole sind die in der Polyurethanlacktechnologie an sich bekannten Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und Polyesterpolycarbonatpolyole. Diese können in A2) einzeln oder in beliebigen Mischungen untereinander eingesetzt werden.

Solche Polyesterpolyole sind die an sich bekannten Polykondensate aus Di- sowie gegebenenfalls Tri-, und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester, wobei Hexandiol(1,6) und Isomere, Neopentylglykol und Hydroxypivalinsäureneopenthylglykolester bevorzugt sind. Daneben können auch Polyole wie Trimethylolpropan, Glycerin, Erythrit, Pentaerythrit, Triemthylolbenzol oder Trishydroxyethylisocyanurat eingesetzt werden.

Als Dicarbonsäuren können Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Funktionalität des zu veresternden Polyols > als 2 ist, können zusätzlich auch Monocarbonsäuren, wie Benzoesäure und Hexancarbonsäure mit verwendet werden.

Bevorzugte Säuren sind aliphatische oder aromatische Säuren der vorstehend genannten Art. Besonders bevorzugt sind Adipinsäure, Isophthalsäure und gegebenenfalls Trimellithsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Ebenfalls können in A2) Hydroxylgruppen aufweisende Polycarbonate, bevorzugt Polycarbonatdiole, mit zahlenmittleren Molekulargewichten Mₙ von 400 bis 8000 g/mol, bevorzugt 600 bis 3000 g/mol eingesetzt werden. Diese sind durch Reaktion von Kohlensäurederivaten, wie Diphenylcarbonat, Dimethylcarbonat oder Phosgen, mit Polyolen, bevorzugt Diolen, erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Bevorzugt enthält das Polycarbonatdiol 40 bis 100 Gew.-% Hexandiol, bevorzugt 1,6-Hexandiol und/oder Hexandiolderivate. Solche Hexandiolderivate basieren auf Hexandiol und weisen neben endständigen OH-Gruppen Ester- oder Ethergruppen auf. Solche Derivate sind durch Reaktion von Hexandiol mit Überschüssigem Caprolacton oder durch Veretherung von Hexandiol mit sich selbst zum Di- oder Trihexylenglykol erhältlich.

Statt oder zusätzlich zu reinen Polycarbonatdiolen können auch Polyether-Polycarbonatdiole in A2) eingesetzt werden.

Die Hydroxylgruppen aufweisenden Polycarbonate sind bevorzugt linear gebaut.

Ebenfalls können in A2) Polyetherpolyole eingesetzt werden.

Geeignet sind beispielsweise die in der Polyurethanchemie an sich bekannten Polytetramethylenglykolpolyether wie sie durch Polymerisation von Tetrahydrofuran mittels kationischer Ringöffnung erhältlich sind.

Ebenfalls geeignete Polyetherpolyole sind die an sich bekannten Additionsprodukte von Styroloxid, Ethylenoxid, Propylenoxid, Butylenoxide und/oder Epichlorhydrins an di- oder polyfunktionelle Startermoleküle. Polyetherpolyole, basierend auf der zumindest anteiligen Addition von Ethylenoxid an di- oder polyfunktionelle Startermoleküle, können auch als Komponente A4) eingesetzt werden (nichtionische Hydrophilierungsmittel).

Als geeignete Startermoleküle können alle dem Stand der Technik nach bekannten Verbindungen eingesetzt werden, wie zum Beispiel Wasser, Butyldiglykol, Glycerin, Diethylenglykol, Trimethyolpropan, Propylenglykol, Sorbit, Ethylendiamin, Triethanolamin, 1,4-Butandiol. Bevorzugte Startermoleküle sind Wasser, Ethylenglykol, Propylenglykol, 1,4-Butandiol, Diethylenglykol und Butyldiglykol.

Besonders bevorzugte Ausführungsformen der Polyurethan Dispersionen (I) enthalten als Komponente A2) eine Mischung aus Polycarbonatpolyolen und Polytetramethylenglykolpolyolen, wobei in dieser Mischung der Anteil an Polycarbonatpolyolen in der Mischung 20 bis 80 Gew.-% und der Anteil an Polytetramethylenglykolpolyolen 80 bis 20 Gew.-% beträgt. Bevorzugt ist ein Anteil von 30 bis 75 Gew.-% an Polytetramethylenglykolpolyolen und ein Anteil von 25 bis 70 Gew.-% an Polycarbonatpolyolen. Besonders bevorzugt ist ein Anteil von 35 bis 70 Gew.-% an Polytetramethylenglykolpolyolen und ein Anteil von 30 bis 65 Gew.-% an Polycarbonatpolyolen, jeweils mit der Maßgabe, dass die Summe der Gewichtsprozente der Polycarbonat- und Polytetramethylenglykolpolyole 100 % ergibt und der Anteil der Summe der Polycarbonat- und Polytetramethylenglykolpolyetherpolyole an der Komponente A2) mindestens 50 Gew.-% bevorzugt 60 Gew.-% und besonders bevorzugt mindestens 70 Gew.-% beträgt.

Die Verbindungen der Komponente A3) besitzen Molekulargewichte von 62 und 400 g/mol.

In A3) können Polyole des genannten Molekulargewichtsbereichs mit bis zu 20 Kohlenstoffatomen, wie Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A, (2,2-Bis(4-hydroxycyclohexyl)propan), Trimethylolpropan, Glycerin, Pentaerythrit sowie deren beliebige Mischungen untereinander eingesetzt werden.

Geeignet sind auch Esterdiole des genannten Molekulargewichtsbereichs wie α-Hydroxybutyl-ε-hydroxycapronsäureester, ω-Hydroxyhexyl-γ-hydroxybuttersäure-ester, Adipinsäure-(ß-hydroxyethyl)ester oder Terephthalsäurebis(β-hydroxyethyl)-ester.

Ferner können in A3) auch monofunktionelle, isocyanatreaktive, Hydroxylgruppen-haltige Verbindungen eingesetzt werden. Beispiele solcher monofunktionellen Verbindungen sind Ethanol, n-Butanol, Ethylenglykolmonobutylether, Diethylenglykolmonomethylether, Ethylenglykolmonobutylether, Diethylenglykolmonobutylether, Propylenglykolmonomethylether, Dipropylenglykol-monomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1-Dodecanol, 1-Hexadecanol.

Bevorzugte Verbindungen der Komponente A3) sind 1,6-Hexandiol. 1,4-Butandiol, Neopentylglykol und Trimethylolpropan.

Unter anionisch bzw. potentiell anionisch hydrophilierenden Verbindungen der Komponente A4) werden sämtliche Verbindungen verstanden, die mindestens eine isocyanatreaktive Gruppe wie eine Hydroxylgruppe aufweisen sowie mindestens eine Funktionalität wie z.B. -COO⁻M⁺, -SO₃⁻M⁺, -PO(O⁻M⁺)₂ mit M⁺ beispielsweise gleich Metallkation, H⁺, NH₄⁺, NHR₃⁺, wobei R jeweils ein C1-C12-Alkylrest, C5-C6-Cycloalkylrest und/oder ein C2-C4-Hydroxyalkylrest sein kann, die bei Wechselwirkung mit wässrigen Medien ein pH-Wertabhängiges Dissoziationsgleichgewicht eingeht und auf diese Weise negativ oder neutral geladen sein kann. Geeignete anionisch oder potentiell anionisch hydrophilierende Verbindungen sind Mono- und Dihydroxycarbonsäuren, Mono- und Dihydroxysulfonsäuren, sowie Mono- und Dihydroxyphosphonsäuren und ihre Salze. Beispiele solcher anionischen bzw. potentiell anionischen Hydrophilierungsmittel sind Dimethylolpropionsäure, Dimethylolbuttersäure, Hydroxypivalinsäure, Äpfelsäure, Zitronensäure, Glykolsäure, Milchsäure und das propoxylierte Addukt aus 2-Butendiol und NaHSO₃, wie es in DE-A 2 446 440, Seite 5 - 9, Formel I-III beschrieben ist. Bevorzugte anionische oder potentiell anionische Hydrophilierungsmittel der Komponente A4) sind solche der vorstehend genannten Art, die über Carboxylat- bzw Carbonsäuregruppen und/oder Sulfonatgruppen verfügen.

Besonders bevorzugte anionische oder potentiell anionische Hydrophilierungsmittel A4) sind solche, die Carboxylat- bzw Carbonsäuregruppen als ionische oder potentiell ionische Gruppen enthalten, wie Dimethylolpropionsäure, Dimethylolbuttersäue und Hydroxypivalinsäure bzw. deren Salze.

Geeignete nichtionisch hydrophilierende Verbindungen der Komponente A4) sind z.B. Polyoxyalkylenether, die mindestens eine Hydroxy- oder Aminogruppe, bevorzugt mindestens eine Hydroxygruppe enthalten.

Beispiele sind die monohydroxyfunktionellen, im statistischen Mittel 5 bis 70, bevorzugt 7 bis 55 Ethylenoxideinheiten pro Molekül aufweisenden Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Diese sind entweder reine Polyethylenoxidether oder gemischte Polyalkylenoxidether, wobei sie mindestens 30 mol-%, bevorzugt mindestens 40 mol-% bezogen auf alle enthaltenen Alkylenoxideinheiten an Ethylenoxideinheiten enthalten.

Besonders bevorzugte nichtionische Verbindungen sind monofunktionelle gemischte Polyalkylenoxidpolyether, die 40 bis 100 mol-% Ethylenoxid- und 0 bis 60 mol-% Propylenoxideinheiten aufweisen.

Geeignete Startermoleküle für solche nichtionischen Hydrophilierungsmittel sind gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykolmonoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole der vorstehend genannten Art. Besonders bevorzugt werden Diethylenglykolmonobutylether oder n-Butanol als Startermoleküle verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Als Komponente B1) können Di- oder Polyamine wie 1,2-Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, Triaminononan, 1,3- und 1,4-Xylylendiamin, α,α,α',α'-Tetramethyl-1,3-und -1,4-xylylendiamin und 4,4-Diaminodicyclohexylmethan und/oder Dimethylethylendiamin eingesetzt werden. Ebenfalls möglich ist die Verwendung von Hydrazin oder sowie Hydraziden wie Adipinsäuredihydrazid. Bevorzugt sind Isophorondiamin, 1,2-Ethylendiamin, 1,4-Diaminobutan, Hydrazin und Diethylentriamin.

Darüber hinaus können als Komponente B1) auch Verbindungen, die neben einer primären Aminogruppe auch sekundäre Aminogruppen oder neben einer Aminogruppe (primär oder sekundär) auch OH-Gruppen aufweisen, eingesetzt werden. Beispiele hierfür sind primäre/sekundäre Amine, wie Diethanolamin, 3-Amino-1-methylaminopropan, 3-Amino-1-ethylaminopropan, 3-Amino-1-cyclohexylaminopropan, 3-Amino-1- Methylaminobutan, Alkanolamine wie N-Aminoethylethanolamin, Ethanolamin, 3-Aminopropanol, Neopentanolamin.

Ferner können als Komponente B1) auch monofunktionelle isocyanatreaktive Aminverbindungen eingesetzt werden, wie beispielsweise Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketime von diprimären Aminen, primär/tertiäre Amine, wie N,N-Dimethylaminopropylamin.

Bevorzugte Verbindungen der Komponente B1) sind Hydrazin, 1,2-Ethylendiamin, 1,4-Diaminobutan und Isophorondiamin.

Unter anionisch bzw. potentiell anionisch hydrophilierenden Verbindungen der Komponente B2) werden sämtliche Verbindungen verstanden, die mindestens eine isocyanatreaktive Gruppe, bevorzugt eine Amino-Gruppe aufweisen, sowie mindestens eine Funktionalität wie z.B. -COO⁻M⁺, -SO₃⁻M⁺, -PO(O⁻M⁺)₂ mit M⁺ beispielsweise gleich Metallkation, H⁺, NH₄⁺, NHR₃⁺, wobei R jeweils ein C1-C12-Alkylrest, C5-C6-Cycloalkylrest und/oder ein C2-C4-Hydroxyalkylrest sein kann, die bei Wechselwirkung mit wässrigen Medien ein pH-Wert-abhängiges Dissoziationsgleichgewicht eingeht und auf diese Weise negativ oder neutral geladen sein kann.

Geeignete anionisch oder potentiell anionisch hydrophilierende Verbindungen sind Mono- und Diaminocarbonsäuren, Mono- und Diaminosulfonsäuren sowie Mono- und Diaminophosphonsäuren und ihre Salze. Beispiele solcher anionischen bzw. potentiell anionischen Hydrophilierungsmittel sind N-(2-Aminoethyl)-β-alanin, 2-(2-Amino-ethylamino)-ethansulfonsäure, Ethylendiamin-propyl- oder-butylsulfonsäure, 1,2- oder 1,3-Propylendiamin-βethylsulfonsäure, Glycin, Alanin, Taurin, Lysin, 3,5-Diaminobenzoesäure und das Additionsprodukt von IPDA und Acrylsäure (EP-A 0 916 647, Beispiel 1). Weiterhin kann das aus aus WO-A 01/88006 bekannte Cyclohexylaminopropansulfonsäure (CAPS) als anionisches oder potentiell anionisches Hydrophilierungsmittel verwendet werden.

Bevorzugte anionische oder potentiell anionische Hydrophilierungsmittel der Komponente B2) sind solche der vorstehend genannten Art, die über Carboxylat- bzw. Carobonsäuregruppen und/oder Sulfonatgruppen verfügen wie die Salze von N-(2-Aminoethyl)-β-alanin, der 2-(2-Aminoethylamino)ethansulfonsäure oder des Additionsproduktes von IPDA und Acrylsäure (EP-A 0 916 647, Beispiel 1).

Zur Hydrophilierung können auch Mischungen aus anionischen bzw. potentiell anionischen Hydrophilierungsmitteln und nichtionischen Hydrophilierungsmitteln verwendet werden.

In einer bevorzugten Ausführungsform zur Herstellung der speziellen Polyurethan-Dispersionen werden die Komponenten A1) bis A4) und B1) bis B2) in den folgenden Mengen eingesetzt, wobei sich die Einzelmengen stets zu 100 Gew.-% addieren:
5 bis 40 Gew.-% Komponente A1),
55 bis 90 Gew.-% A2),
0,5 bis 20 Gew.-% Summe der Komponenten A3) und B1)
0,1 bis 25 Gew.-% Summe der Komponenten Komponente A4) und B2), wobei bezogen auf die Gesamtmengen der Komponenten A1) bis A4) und B1) bis B2) 0,1 bis 5 Gew.-% an anionischen bzw. potentiell anionischen Hydrophilierungsmitteln aus A4) und/oder B2) verwendet werden.

In einer besonders bevorzugten Ausführungsform zur Herstellung der speziellen Polyurethan-Dispersionen werden die Komponenten A1) bis A4) und B1) bis B2) in den folgenden Mengen eingesetzt, wobei sich die Einzelmengen stets zu 100 Gew.-% aufaddieren:
5 bis 35 Gew.-% Komponente A1),
60 bis 90 Gew.-% A2),
0,5 bis 15 Gew.-% Summe der Komponenten A3) und B1)
0,1 bis 15 Gew.-% Summe der Komponenten Komponente A4) und B2), wobei bezogen auf die Gesamtmengen der Komponenten A1) bis A4) und B1) bis B2) 0,2 bis 4 Gew.-% an anionischen bzw. potentiell anionischen Hydrophilierungsmitteln aus A4) und/oder B2) verwendet werden.

In einer ganz besonders bevorzugten Ausführungsform zur Herstellung der speziellen Polyurethan-Dispersionen werden die Komponenten A1) bis A4) und B1) bis B2) in den folgenden Mengen eingesetzt, wobei sich die Einzelmengen stets zu 100 Gew.-% aufaddieren:
10 bis 30 Gew.-% Komponente A1),
65 bis 85 Gew.-% A2),
0,5 bis 14 Gew.-% Summe der Komponenten A3) und B1)
0,1 bis 13,5 Gew.-% Summe der Komponenten A4) und B2), wobei bezogen auf die Gesamtmengen der Komponenten A1) bis A4) und B1) bis B2) 0,5 bis 3,0 Gew.-% an anionischen bzw. potentiell anionischen Hydrophilierungsmitteln aus A4) und/oder B2) verwendet werden.

Die Herstellung der anionisch hydrophilierten Polyurethan-Dispersionen (I) kann in einer oder mehreren Stufe/-n in homogener oder bei mehrstufiger Umsetzung, teilweise in disperser Phase durchgeführt werden. Nach vollständig oder teilweise durchgeführter Polyaddition aus A1) bis A4) erfolgt ein Dispergier-, Emulgier- oder Lösungsschritt. Im Anschluss erfolgt gegebenenfalls eine weitere Polyaddition oder Modifikation in disperser Phase.

Dabei können alle aus dem Stand der Technik bekannten Verfahren wie z. B. Prepolymer-Mischverfahren, Acetonverfahren oder Schmelzdispergierverfahren verwendet werden. Bevorzugt wird das Aceton-Verfahren verwendet.

Für die Herstellung nach dem Aceton-Verfahren werden üblicherweise die Bestandteile A2) bis A4) und die Polyisocyanatkomponente A1) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden.

Geeignete Lösungsmittel sind die üblichen aliphatischen, ketofunktionellen Lösemittel wie Aceton, 2-Butanon, die nicht nur zu Beginn der Herstellung, sondern gegebenenfalls in Teilen auch später zugegeben werden können. Bevorzugt sind Aceton und 2-Butanon.

Andere Lösemittel wie Xylol, Toluol, Cyclohexan, Butylacetat, Methoxypropylacetat, N-Methylpyrrolidon, N-Ethylpyrrolidon, Lösemittel mit Ether- oder Estereinheiten können zusätzlich eingesetzt und ganz oder teilweise abdestilliert werden oder vollständig im Falle von, N-Methylpyrrolidon, N-Ethylpyrrolidon in der Dispersion verbleiben. Bevorzugt werden aber außer den üblichen aliphatischen, ketofunktionellen Lösemitteln keine anderen Lösungsmittel verwendet.

Anschließend werden die gegebenenfalls zu Beginn der Reaktion noch nicht zugegebenen Bestandteile von A1) bis A4) zudosiert.

Bei der Herstellung des Polyurethan-Prepolymeren aus A1) bis A4) beträgt das Stoffmengenverhältnis von Isocyanatgruppen zu mit isocyanatreaktiven Gruppen 1,05 bis 3,5, bevorzugt 1,2 bis 3,0, besonders bevorzugt 1,3 bis 2,5.

Die Umsetzung der Komponenten A1) bis A4) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Im Neutralisationsschritt zur teilweisen oder vollständigen Überführung potentiell anionischer Gruppen in anionische Gruppen werden Basen wie tertiäre Amine, z.B. Trialkylamine mit 1 bis 12, bevorzugt 1 bis 6 C-Atomen, besonders bevorzugt 2 bis 3 C-Atomen in jedem Alkylrest oder Alkalimetallbasen wie die entsprechenden Hydroxide eingesetzt.

Beispiele hierfür sind Trimethylamin, Triethylamin, Methyldiethylamin, Tripropylamin, N-methylmorpholin, Methyldiisopropylamin, Ethyldiisopropylamin und Diisopropylethylamin. Die Alkylreste können beispielsweise auch Hydroxylgruppen tragen, wie bei den Dialkylmonoalkanol-, Alkyldiakanol- und Trialkanolaminen. Als Neutralisationsmittel sind gegebenenfalls auch anorganische Basen, wie wässrige Ammoniaklösung oder Natrium- bzw. Kaliumhydroxid einsetzbar.

Bevorzugt sind Ammoniak, Triethylamin, Triethanolamin, Dimethylethanolamin oder Diisopropylethylamin sowie Natriumhydroxid und Kaliumhydroxid, besonders bevorzugt sind Natriumhydroxid und Kaliumhydroxid.

Die Stoffmenge der Basen beträgt 50 und 125 mol%, bevorzugt zwischen 70 und 100 mol% der Stoffmenge der zu neutralisierenden Säuregruppen. Die Neutralisation kann auch gleichzeitig mit der Dispergierung erfolgen, in dem das Dispergierwasser bereits das Neutralisationsmittel enthält.

Im Anschluss wird in einem weiteren Verfahrensschritt, falls noch nicht oder nur teilweise geschehen, das erhaltene Prepolymer mit Hilfe von aliphatischen Ketonen wie Aceton oder 2-Butanon gelöst.

Bei der Kettenverlängerung in Stufe B) werden NH₂- und/oder NH-funktionelle Komponenten mit den noch verbliebenen Isocyanatgruppen des Prepolymers teilweise oder vollständig umgesetzt. Bevorzugt wird die Kettenverlängerung/-terminierung vor der Dispergierung in Wasser durchgeführt.

Zur Kettenterminierung werden üblicherweise Amine B1) mit einer gegenüber Isocyanaten reaktiven Gruppe wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketime von diprimären Aminen, primär/tertiäre Amine, wie N,N-Dimethylaminopropylamin verwendet.

Werden zur teilweisen oder vollständigen Kettenverlängerung anionische oder potentiell anionische Hydrophilierungsmittel entsprechend der Definition B2) mit NH₂- oder NH-Gruppen eingesetzt, erfolgt die Kettenverlängerung der Prepolymere bevorzugt vor der Dispergierung.

Die aminischen Komponenten B1) und B2) können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel mit verwendet werden, so beträgt der Verdünnungsmittelgehalt in der in B) eingesetzten Komponente zur Kettenverlängerung bevorzugt 70 bis 95 Gew.-%.

Die Dispergierung erfolgt bevorzugt im Anschluss an die Kettenverlängerung. Dazu wird das gelöste und kettenverlängerte Polyurethanpolymer gegebenenfalls unter starker Scherung, wie z.B. starkem Rühren, entweder in das Dispergierwasser eingetragen oder es wird umgekehrt das Dispergierwasser zu den kettenverlängerte Polyurethanpolymerlösungen gerührt. Bevorzugt wird das Wasser in das gelöste kettenverlängerte Polyurethanpolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Der Restgehalt an organischen Lösemitteln in den Polyurethan-Dispersionen (I) beträgt typischerweise weniger als 1,0 Gew.-% bezogen auf die gesamte Dispersion.

Der pH-Wert der erfindungswesentlichen Polyurethan-Dispersionen (I) beträgt typischerweise weniger als 9,0, bevorzugt weniger als 8,5, besonders bevorzugt weniger als 8,0 und liegt ganz besonders bevorzugt bei 6,0 bis 7,5.

Der Feststoffgehalt der Polyurethan-Dispersionen (I) beträgt 40 bis 70, bevorzugt 50 bis 65, besonders bevorzugt 55 bis 65 Gew.-%.

Die Polyurethandispersionen (I) können nichtfunktionell oder über Hydroxyl- oder Aminogruppen funktionalisiert sein. Darüber hinaus können die Dispersionen (I) in einer nicht bevorzugten Ausführungsform auch über reaktive Gruppen in Form von blockierten Isocyanatgruppen, wie beispielsweise in der DE-A 19 856 412 beschrieben, verfügen.

Als Koagulantien (II) können in den Zusammensetzungen alle mindestens 2 kationische Gruppen enthaltende organische Verbindungen, bevorzugt alle bekannten kationischen Flockulations- und Fällungsmittel des Stands der Technik, wie kationische Homo- oder Copolymere von Salzen des Poly[2-(N,N,N-trimethylamino)-ethylacrylats], Polyethylenimins, Poly[N-(dimethylamino-methyl)acrylamids], substituierter Acrylamide, substituierter Methacrylamide, N-Vinylformamids, N-Vinylacetamids, N-Vinylimidazols, 2-Vinylpyridins oder 4-Vinylpyridins eingesetzt werden.

Bevorzugte Koagulantien (II) sind kationische Copolymere des Acrylamids, welche Struktureinheiten der allgemeinen Formel (2) aufweisen, besonders bevorzugt sind kationische Copolymere des Acrylamids, welche Struktureinheiten der Formel (1) und solche der allgemeinen (2) aufweisen, 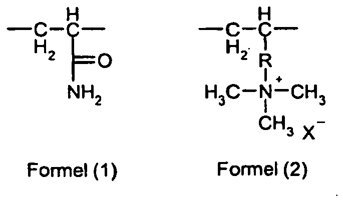 wobei
- R: C=O, -COO(CH₂)₂- oder -COO(CH₂)₃- und
- X⁻: ein Halogenidion, bevorzugt Chlorid ist.

Besonders bevorzugt werden als kationisches Koagulanz (II) derartige Polymere mit einem zahlenmittleren Molekulargewicht von 500.000 bis 50.000.000 g/mol eingesetzt.

Solche Koagulantien (II) werden beispielsweise unter dem Markennamen Praestol^{®} (Degussa Stockhausen, Krefeld, DE) als Flockungsmittel für Klärschlämme vertrieben. Bevorzugte Koagulantien vom Praestol^{®}-Typ sind Praestol^{®} K111L, K122L, K133L, BC 270L, K 144L, K 166L, BC 55L, 185K, 187K, 190K, K222L, K232L, K233L, K234L, K255L, K332L, K 333L, K 334L, E 125, E 150 sowie deren Mischungen. Ganz besonders bevorzugte Koagulationsmittel sind Praestol^{®} 185K, 187K und 190K sowie deren Mischungen.

Die Restgehalte an Monomeren, insbesondere Acrylamid, liegen bei den vorstehend beschriebenen Koagulantien vorzugsweise bei weniger als 1 Gew.-%, besonders bevorzugt bei weniger als 0,5 Gew.-% und ganz besonders bevorzugt bei weniger als 0,025 Gew.-%.

Die Koagulantien können in fester Form oder als wässrige Lösungen bzw. Dispersionen eingesetzt werden. Bevorzugt ist die Verwendung von wässrigen Dispersionen bzw. Lösungen.

Als Schaumstabilisatoren (III) werden bekannte handelsübliche Verbindungen eingesetzt, wie beispielsweise wasserlösliche Fettsäureamide, Sulfosuccinamide, Kohlenwasserstoffsulfonate oder seifenartige Verbindungen (Fettsäuresalze), beispielsweise solche, worin der lipophile Rest 12 bis 24 Kohlenstoffatome enthält; insbesondere Alkansulfonate mit 12 bis 22 Kohlenstoffatomen im Kohlenwasserstoffrest, Alkylbenzosulfonate mit 14 bis 24 Kohlenstoffatomen im gesamten Kohlenwasserstoffrest, oder Fettsäureamide oder seifenartige Fettsäuresalze von Fettsäuren mit 12 bis 24 Kohlenstoffatomen. Die wasserlöslichen Fettsäureamide sind vorzugsweise Fettsäureamide von Mono- oder Di-(C2-3-alkanol)-aminen. Die seifenartigen Fettsäuresalze können beispielsweise Alkalimetallsalze, Aminsalze oder unsubstituierte Ammoniumsalze sein. Als Fettsäuren kommen im allgemeinen bekannte Verbindungen in Betracht, beispielsweise Laurinsäure, Myristinsäure, Palmitinsäure, Ölsäure, Stearinsäure, Ricinolsäure, Behensäure oder Arachidinsäure, oder noch technische Fettsäuren, z.B. Kokosfettsäure, Talgfettsäure, Sojafettsäure oder technische Ölsäure, sowie deren Hydrierungsprodukte.

Die Schaumstabilisatoren (III) sind zweckmäßig solche, die sich weder unter Verschäumungsbedingungen noch unter Applikationsbedingungen zersetzen.

Bevorzugt wird eine Mischung aus Sulfosuccinamiden und Ammoniumstearaten verwendet. Die Mischung aus Sulfosuccinamiden und Ammoniumstearaten enthält bevorzugt zwischen 20 und 60 Gew.-% Ammoniumstearate, besonders bevorzugt 30 bis 50 Gew.-% an Ammoniumstearate und bevorzugt 80 und 40 Gew.-% Sulfosuccinamide, besonders bevorzugt 70 bis 50 Gew.-% Sulfosuccinamide, wobei sich die Gewichtsprozentangaben auf die nichtflüchtigen Komponenten beider Schaumstablisatorklassen beziehen und sich die Gew.-% anteile beider zu 100 Gew- % addieren.

In den erfindungsgemäßen Beschichtungsmitteln sind auch Vernetzer (IV) enthalten. Je nach Wahl des Vernetzer (IV) und der wässrigen Polyurethandispersion (I) können sowohl Einkomponentensysteme als auch Zweikomponentensysteme hergestellt werden. Unter Einkomponentenbeschichtungssysteme im Sinne der vorliegenden Erfindung sind dabei Beschichtungsmittel zu verstehen, bei denen Bindemittelkomponente (I) und Vernetzerkomponente (IV) zusammen gelagert werden können, ohne dass eine Vernetzungsreaktion in merklichen bzw. für die spätere Applikation schädlichen Ausmaß stattfindet. Unter Zweikomponentenbeschichtungssysteme im Sinne der vorliegenden Erfindung versteht man Überzugsmittel, bei denen Bindemittelkomponente (I) und Vernetzerkomponente (IV) aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Geeignete Vernetzer IV) sind beispielsweise blockierte oder unblockierte Polyisocyanat-Vernetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze oder Anilinharze. Bevorzugt sind Melamin-Formaldehyd Harze, wobei bis 20 mol-% des Melamins durch äquivalente Mengen Harnstoff ersetzt sein können. Besonders bevorzugt ist methyloliertes Melamin, z.B. Bi-Tri- und/oder Tetramethyolmelamin.

Die Melamin-Formaldehyd-Harze werden üblicherweise in Form ihrer konzentrierten wässrigen Lösungen eingesetzt, deren Feststoffgehalt 30 bis 70 Gew.-%, bevorzugt 35 bis 65 Gew.-% sowie besonders bevorzugt 40 bis 60 Gew.-% betragen.

Als Verdicker (V) können handelsübliche Verdicker eingesetzt werden, wie Dextrin-, Stärke- oder Cellulosederivate wie Celluloseether oder Hydroxyethylcellulose, organische vollsynthetische Verdicker, auf Basis von Polyacrylsäuren, Polyvinylpyrrolidonen, Poly(meth)acrylverbindungen oder Polyurethanen (assoziative Verdicker) sowie anorganische Verdicker, wie Betonite oder Kieselsäuren.

Die erfindungswesentlichen Zusammensetzungen enthalten bezogen auf Trockensubstanz typischerweise 80 bis 99,5 Gewichtsteile der Dispersion (I), 0,5 bis 5 Gewichtsteile des kationischen Koagulanz (II), 0,1 bis 10 Gewichtsteile Schaumhilfsmittel (III), 0 bis 10 Gewichtsteile Vernetzer (IV) und 0 bis 10 Gew.-% Verdicker (V).

Bevorzugt enthalten die erfindungswesentlichen Zusammensetzungen bezogen auf Trockensubstanz 85 bis 97 Gewichtsteile der Dispersion (I), 0,75 bis 4 Gewichtsteile des kationischen Koagulanz (II), 0,5 bis 6 Gewichtsteile Schaumhilfsmittel (II), 0,5 bis 5 Gewichtsteile Vernetzer (IV) und 0 bis 5 Gew.-% Verdicker (V).

Besonders bevorzugt enthalten die erfindungswesentlichen Zusammensetzungen bezogen auf Trockensubstanz 89 bis 97 Gewichtsteile der Dispersion (I), 0,75 bis 3 Gewichtsteile des kationischen Koagulanz (II), 0,5 bis 5 Gewichtsteile Schaumhilfsmittel (III), 0,75 bis 4 Gewichtsteile Vernetzer (IV) und 0 bis 4 Gewichtsteile Verdicker (V).

Neben den Komponenten (I) - (V) können in den erfindungswesentlichen Zusammensetzungen auch andere wässrige Bindemittel eingesetzt werden. Solche wässrigen Bindemittel können z. B. aus Polyester-, Polyacrylat-, Polyepoxid- oder anderen Polyurethanpolymeren aufgebaut sein. Auch die Kombination mit strahlenhärtbaren Bindemitteln, wie sie z. B. in der EP-A-0 753 531 beschrieben sind, ist möglich. Ferner können auch andere anionische oder nicht-ionische Dispersionen, wie Polyvinylacetat-, Polyethylen-, Polystyrol-, Polybutadien-, Polyvinylchlorid-, Polyacrylat- und Copolymerisat-Dispersionen eingesetzt werden.

Das Aufschäumen im erfindungsgemäßen Verfahren geschieht durch mechanisches Rühren der Zusammensetzung bei hohen Drehzahlen, d. h. unter Eintrag hoher Scherkräfte oder durch Entspannung eines Treibgases, wie z. B. dem Einblasen von Druckluft.

Das mechanische Aufschäumen kann mit beliebigen mechanischen Rühr-, Misch- und Dispergiertechniken erfolgen. In der Regel wird hierbei Luft eingetragen, aber auch Stickstoff und andere Gase können hierfür benutzt werden.

Die Herstellung der erfindungsgemäßen Beschichtungsmittel aus den Komponenten I-V.) erfolgt durch homogene Vermischung aller Komponenten in beliebiger Reihenfolge nach den im Stand der Technik bekannten Methoden. Die Komponente II kannen auch während oder nach dem Aufschäumschritt zugegeben werden.

Die erfindungsgemäßen Beschichtungsmittelzusammensetzungen können zusätzlich noch Antioxidantien und/oder Lichtschutzmittel und/oder andere Hilfs- und Zusatzmittel wie beispielsweise Emulgatoren, Entschäumer, Verdicker enthalten. Schließlich können auch Füllstoffe, Weichmacher, Pigmente, Kieselsäuresole, Aluminium-, Ton-, Dispersionen, Verlaufsmittel oder Thixotropiemittel enthalten sein. Je nach gewünschtem Eigenschaftsbild und Verwendungszweck der erfindungsgemäßen Beschichtungsmittel auf PUR-Dispersionsbasis können bis zu 70 Gew.-%, bezogen auf Gesamttrockensubstanz, solcher Füllstoffe im Endprodukt enthalten sein.

Weiterhin ist es möglich, die erfindungsgemäßen Beschichtungsmittelzusammensetzungen durch Polyacrylate zu modifizieren. Hierzu wird in Gegenwart der Polyurethan-Dispersion eine Emulsionspolymerisation von olefinisch ungesättigten Monomeren, z. B. Estern aus (Meth)acrylsäure und Alkoholen mit 1 bis 18 C-Atomen, Styrol, Vinylestern oder Butadien durchgeführt, wie es z.B. in der DE-A-1 953 348, EP-A-0 167 188, EP-A-0 189 945 und EP-A-0 308 115 beschrieben ist. Die Monomere enthalten eine oder mehrere olefinische Doppelbindungen. Daneben können die Monomere funktionelle Gruppen wie Hydroxyl-, Epoxy-, Methylol- oder Acetoacetoxygruppen enthalten.

Weiterer Gegenstand der vorliegenden Erfindung ist die Verwendung der erfindungsgemäßen Beschichtungsmittel zur Herstellung von mikroporöser Beschichtungen auf verschiedensten Trägermaterialien.

Als Trägermaterialien eignen sich insbesondere textile Flächengebilde, Flächensubstrate aus Metall, Glas, Keramik, Beton, Naturstein, Leder, Naturfasern, und Kunststoffen wie PVC, Polyolefine, Polyurethan oder ähnliches.

Unter textilen Flächengebilden im Sinne der vorliegenden Erfindung sind beispielsweise Gewebe, Gewirke, gebundene und ungebundene Vliese zu verstehen. Die textilen Flächengebilde können aus synthetischen, natürlichen Fasern und/oder deren Mischungen aufgebaut sein. Grundsätzlich sind Textilien aus beliebigen Fasern für das erfindungsgemäße Verfahren geeignet.

Die erfindungsgemäßen Beschichtungsmittel sind stabil und besitzen je nach Zusammensetzung in der Regel eine Verarbeitungszeit bis zu maximal 24 h.

Die erfindungsgemäßen Beschichtungsmittel sind aufgrund ihrer exzellenten Dehnbarkeit bei hohen Zugfestigkeiten nach Verfilmung insbesondere zur Herstellung mikroporöser Beschichtungen auf flexiblen Substraten geeignet.

Die Herstellung der mikroporösen Beschichtungen erfolgt, in dem die erfindungsgemäßen Beschichtungsmittel enthaltend die Komponenten I.)-V.) zunächst geschäumt werden.

Das Aufschäumen im erfindungsgemäßen Verfahren geschieht durch mechanisches Rühren der Zusammensetzung bei hohen Drehzahlen, d.h. unter Eintrag hoher Scherkräfte oder durch Entspannung eines Treibgases, wie z.B. dem Einblasen von Druckluft.

Das mechanische Aufschäumen kann mit beliebigen mechanischen Rühr-, Misch- und Dispergiertechniken erfolgen. In der Regel wird hierbei Luft eingetragen, aber auch Stickstoff und andere Gase können hierfür benutzt werden.

Der so erhaltene Schaum wird beim Aufschäumen oder unmittelbar danach auf ein Substrat aufgetragen oder in eine Form gegeben und getrocknet.

Ein mehrschichtiger Auftrag mit zwischengeschalteten Trocknungsschritten ist grundsätzlich auch möglich.

Für eine schnellere Trocknung und Fixierung der Schäume werden jedoch bevorzugt Temperaturen oberhalb von 30°C benutzt. Bei der Trocknung sollten jedoch Temperaturen von 200°C, bevorzugt 160°C, nicht überschritten werden. Sinnvoll ist auch eine zwei- oder mehrstufige Trocknung, mit entsprechend ansteigendem Temperaturgradienten, um eine Aufkochung der Beschichtung zu verhindern.

Die Trocknung erfolgt in der Regel unter Verwendung von an sich bekannten Heiz- und Trockenapparaten, wie (Umluft-) Trockenschränken, Heißluft oder IR-Strahlern. Auch die Trocknung durch Führen des beschichteten Substrates über geheizte Oberflächen, z.B. Walzen, ist möglich.

Der Auftrag sowie die Trocknung können jeweils diskontinuierlich oder kontinuierlich durchgeführt werden, bevorzugt ist jedoch ein gänzlich kontinuierliches Verfahren

Die Polyurethan-Schäume haben vor ihrer Trocknung typischerweise Schaumdichten von 50 bis 800 g/Liter, bevorzugt 200 bis 700 g/Liter, besonders bevorzugt 300 bis 600 g/Liter (Masse aller Einsatzstoffe [in g] bezogen auf das Schaumvolumen von einem Liter).

Die Polyurethan-Schäume besitzen nach ihrer Trocknung und Koagulation eine mikroporöse, zumindest teilweise offenporige Struktur mit miteinander kommunizierenden Zellen. Die Dichte der getrockneten Schäume liegt dabei typischerweise 0,3-0,7 g/cm³, bevorzugt 0,3-0,6 g/cm³ und liegt ganz besonders bevorzugt bei 0,3 bis 0,5 g/cm³.

Die Polyurethan-Schäume weisen eine gute mechanische Festigkeit und hohe Elastizität auf. Typischerweise sind die Werte für die maximale Zugfestigkeit größer als 0,2 N/mm² und die maximale Dehnung ist größer als 250 %. Bevorzugt ist die maximale Zugfestigkeit größer als 0,4 N/mm² und die Dehnung größer als 350 % (Bestimmung nach DIN 53504).

Die Polyurethan-Schäume haben nach dem Trocknen typischerweise eine Dicke von 0,1 mm bis 50 mm, bevorzugt 0,5 mm bis 20 mm, besonders bevorzugt 1 bis 10 mm, ganz besonders bevorzugt 1 bis 5 mm.

Die Polyurethan-Schäume können überdies mit weiteren Materialien verklebt, laminiert oder beschichtet werden, beispielsweise auf Basis von Hydrogelen, (semi-)permeablen Folien, Beschichtungen oder anderen Schäumen.

Die geschäumte Zusammensetzung wird dann mit üblichen Beschichtungseinrichtungen, beispielsweise einem Rakel, z. B. einem Streichrakel, Walzen oder anderen Schaumauftragungsgeräten, auf den Träger aufgetragen. Die Auftragung kann ein- oder beidseitig erfolgen. Die Auftragungsmenge wird so gewählt, dass die Gewichtszunahme nach dem 2. Trocknungsschritt 30 % bis 100 %, vorzugsweise 40 % bis 80% und besonders bevorzugt 45 % bis 75 % in bezug auf den textilen Träger beträgt. Die Auftragsmenge pro m² kann über den Druck im geschlossenen Rakelsystem oder durch die Messzahl der Schablone beeinflusst werden. Das Nass-Auftragsgewicht entspricht vorzugsweise dem Gewicht des textilen Trägers. Die Schaumzerfallgeschwindigkeit auf dem Träger ist abhängig von Art und Menge des Schaumstabilisators (III), des Koagulanz (II) und der Ionizität der wässrigen Polyurethandispersion (I).

Die Fixierung der entstandenen offenporigen Zellstruktur durch Trocknung bei einer Temperatur zwischen 35 und 100 °C, vorzugsweise zwischen 60°C und 100 °C, besonders bevorzugt bei 70 bis 100°C. Die Trocknung kann in einem konventionellen Trockner erfolgen. Ebenfalls möglich ist eine Trocknung in einem Mikrowellen (HF)-Trockner.

Anschließend kann Schaummatrix in einem weiteren Trocknungsschritt falls benötigt nochmals fixiert werden. Dieser optionale zusätzliche Fixierschritt wird vorzugsweise bei 100°C bis 175°C, besonders bevorzugt bei 100 bis 150°C und ganz besonders bevorzugt bei 100°C bis 139 °C durchgeführt, wobei die Dauer der Trocknung so gewählt ist, dass sichergestellt ist, dass die PUR-Schaummatrix ausreichend stark vernetzt ist.

Alternativ kann das Trocknen und Fixieren in einem einzigen Schritt im Anschluss an die Koagulation durch direktes Erhitzen auf vorzugsweise 100 bis 175°C, besonders bevorzugt auf 100 bis 150°C und ganz besonders bevorzugt auf 100°C bis 139 °C erfolgen, wobei die Kontaktzeit in einer Weise gewählt wird, das ein ausreichendes Trocknen und eine ausreichende Fixierung der PUR-Schaummatrix sichergestellt ist.

Die getrockneten textilen Träger können vor, während oder nach dem Auskondensieren oberflächenbehandelt werden, z. B. durch Schleifen, Velourisieren, Rauhen und/oder Tumblen.

Die erfindungsgemäßen Beschichtungsmittel können auch in mehreren Schichten auf ein Trägermaterial, beispielsweise zur Erzeugung besonders hoher Schaumauflagen, aufgetragen werden.

Darüber hinaus sind die erfindungsgemäßen mikroporösen Beschichtungen auch in Mehrschichtaufbauten einsetzbar.

Gegenstand der vorliegenden Erfindung sind auch Substrate beschichtet mit den erfindungsgemäßen mikroporösen Beschichtungen. Aufgrund der hervorragenden anwendungstechnischen Eigenschaften eignen sich die erfindungsgemäßen Zusammensetzungen bzw. die aus ihnen erzeugten Schichten insbesondere zur Beschichtung bzw. Herstellung von Oberbekleidung, Kunstlederartikeln, Schuhen, Möbelbezugsstoffen, Automobil-Innenausstattungsartikeln und Sportgeräten, wobei diese Aufzählung lediglich beispielhaft und nicht etwa limitierend zu verstehen ist.

### Beispiele:

Sofern nicht abweichend gekennzeichnet, beziehen sich alle Prozentangaben auf das Gewicht.

Die Bestimmung der Festkörpergehalte erfolgte nach DIN-EN ISO 3251.

NCO-Gehalte wurden, wenn nicht ausdrücklich anders erwähnt, volumetrisch gemäß DIN-EN ISO 11909 bestimmt.

### Verwendete Substanzen und Abkürzungen:

- Diaminosulfonat:: NH₂-CH₂CH₂-NH-CH₂CH₂-SO₃Na (45 %ig in Wasser)
- Desmophen^{®} C2200:: Polycarbonatpolyol, OH-Zahl 56 mg KOH/g, zahlenmittleres Molekulargewicht 2000 g/mol (BayerMaterialScience AG, Leverkusen, DE)
- PolyTHF^{®} 2000:: Polytetramethylenglykolpolyol, OH-Zahl 56 mg KOH/g, zahlenmittleres Molekulargewicht 2000 g/mol (BASF AG, Ludwigshafen, DE)
- PolyTHF^{®} 1000:: Polytetramethylenglykolpolyol, OH-Zahl 112 mg KOH/g, zahlenmittleres zahlenmittleres Molekulargewicht 1000 g/mol (BASF AG, Ludwigshafen, DE)
- Polyether LB 25:: monofunktioneller Polyether auf Ethylenoxid-/Propylenoxidbasis, zahlenmittleres Molekulargewicht 2250 g/mol, OH-Zahl 25 mg KOH/g (BayerMaterialScience AG, Leverkusen, DE)
- Stokal^{®} STA:: Schaumhilfsmittel auf Ammoniumstearat-Basis, Wirkstoffgehalt: 30 % (Bozzetto GmbH, Krefeld, DE)
- Stokal^{®} SR:: Schaumhilfsmittel auf Succinamat-Basis, Wirkstoffgehalt: ca. 34 % (Bozzetto GmbH, Krefeld, DE)
- Praestol^{®} 185 K:: Kationisches Flockungshilfsmittel enthaltend die Struktur A, Festkörpergehalt 25 % (Degussa AG, DE)
- Euderm rot: Azo-Pigment-Zubereitung, enthält C.I.Pigment red 170 (Lanxess AG, Leverkusen, DE)

Die Bestimmung der mittleren Teilchengrößen (angegeben ist das Zahlenmittel) der Polyurethan-Dispersionen (I) erfolgte mittels Laserkorrelations-Spektroskopie (Gerät: Malvern Zetasizer 1000, Malver Inst. Limited).

### Beispiel 1: PUR-Dispersion (Komponente I)

144,5 g Desmophen^{®} C2200, 188,3 g PolyTHF^{®} 2000, 71,3 g PolyTHF^{®} 1000 und 13,5 g Polyether LB 25 wurden auf 70 °C aufgeheizt. Anschließend wurde bei 70 °C innerhalb von 5 min ein Gemisch aus 45,2g Hexamethylendiisocyanat und 59,8 g Isophorondiisocyanat zugegeben und solange unter Rückfluss gerührt bis der theoretische NCO-Wert erreicht war. Das fertige Prepolymer wurde mit 1040 g Aceton bei 50 °C gelöst und anschließend eine Lösung aus 1,8 g Hydrazinhydrat, 9,18 g Diaminosulfonat und 41,9 g Wasser innerhalb von 10 min zudosiert. Die Nachrührzeit betrug 10 min. Nach Zugabe einer Lösung aus 21,3 g Isophorondiamin und 106,8 g Wasser wurde innerhalb von 10 min durch Zugabe von 254 g Wasser dispergiert. Es folgte die Entfernung des Lösemittels durch Destillation im Vakuum.

Die erhaltene weiße Dispersion hatte nachfolgenden Eigenschaften:

| | |
|---|---|
| Feststoffgehalt: | 60 % |
| Partikelgröße (LKS): | 285 nm |

### Beispiel 2: PUR-Dispersion (Komponente I)

2159,6 g eines difunktionellen Polyesterpolyols auf Basis Adipinsäure, Neopentylglykol und Hexandiol (mittleres Molgekulargewicht 1700 g/mol, OHZ = 66), 72,9 g eines monofunktionellen Polyethers auf Ethylenoxid-/Propylenoxidbasis (70/30) (mittlerem Molekulargewicht 2250 g/mol, OH-Zahl 25 mg KOH/g) wurden auf 65°C aufgeheizt. Anschließend wurde bei 65°C innerhalb von 5 min ein Gemisch aus 241,8 g Hexamethylendiisocyanat und 320,1 g Isophorondiisocyanat zugegeben und solange bei 100°C gerührt bis der theoretische NCO-Wert von 4,79 % erreicht wurde. Das fertige Prepolymer wurde mit 4990 g Aceton bei 50°C gelöst und anschließend eine Lösung aus 187,1 g Isophorondiamin und 322,7 g Aceton innerhalb von 2 min zudosiert. Die Nachrührzeit betrug 5 min. Anschließend wurde innerhalb von 5 min eine Lösung aus 63,6 g Diaminosulfonat, 6,5 Hydrazinhydrat und 331,7 g Wasser zudosiert. Die Dispergierung erfolgte durch Zugabe von 1640,4 g Wasser. Es folgte die Entfernung des Lösemittels durch Destillation im Vakuum.

Die erhaltene weiße Dispersion hatte nachfolgenden Eigenschaften:

| | |
|---|---|
| Feststoffgehalt: | 58,9 % |
| Partikelgröße (LKS): | 248 nm |

### Beispiel 3: PUR-Dispersion (Komponente I)

2210,0 g eines difunktionellen Polyesterpolyols auf Basis Adipinsäure, Neopentylglykol und Hexandiol (mittleres Molgekulargewicht 1700 g/mol, OHZ = 66) wurde auf 65°C aufgeheizt. Anschließend wurde bei 65°C innerhalb von 5 min ein Gemisch aus 195,5 g Hexamethylendiisocyanat und 258,3 g Isophorondiisocyanat zugegeben und solange bei 100°C gerührt bis der theoretische NCO-Wert von 3,24% erreicht wurde. Das fertige Prepolymer wurde mit 4800 g Aceton bei 50°C gelöst und anschließend eine Lösung aus 29,7 g Ethylendiamin, 95,7 g Diaminosulfonat und 602 g Wasser innerhalb von 5 min zudosiert. Die Nachrührzeit betrug 15 min. Anschließend wurde innerhalb von 20 min durch Zugabe von 1169 g Wasser dispergiert. Es folgte die Entfernung des Lösemittels durch Destillation im Vakuum.

Die erhaltene weiße Dispersion hatte nachfolgenden Eigenschaften:

| | |
|---|---|
| Feststoffgehalt: | 60 % |
| Partikelgröße (LKS): | 278 nm |

### Beispiel 4: PUR-Dispersion (Komponente I)

987,0 g PolyTHF^{®} 2000, 375,4 g PolyTHF^{®} 1000, 761,3 g Desmophen^{®} C2200 und 44,3 g Polyether LB 25 wurden in einer Standard-Rührapparatur auf 70 °C aufgeheizt. Anschließend wurde bei 70 °C innerhalb von 5 min ein Gemisch aus 237,0 g Hexamethylendiisocyanat und 313,2 g Isophorondiisocyanat zugegeben und bei 120°C gerührt, bis der theoretische NCO-Wert erreicht oder leicht unterschritten war. Das fertige Prepolymer wurde mit 4830 g Aceton gelöst und dabei auf 50 °C abgekühlt und anschließend wurde eine Lösung aus 25,1 g Ethylendiamin, 116,5 g Isophorondiamin, 61,7 g Diaminosulfonat und 1030 g Wasser innerhalb von 10 min zudosiert. Die Nachrührzeit betrug 10 min. Dann wurde durch Zugabe von 1250 g Wasser dispergiert. Es folgte die Entfernung des Lösemittels durch Destillation im Vakuum.

Die erhaltene weiße Dispersion hatte nachfolgenden Eigenschaften:

| | |
|---|---|
| Feststoffgehalt: | 61% |
| Partikelgröße (LKS): | 312 nm |

### Beispiel 5: PUR-Dispersion (Komponente I)

34,18 g PolyTHF^{®} 2000, 85,1 g PolyTHF^{®} 1000, 172,6 g Desmophen^{®} C2200 und 10,0 g Polyether LB 25 wurden in einer Standard-Rührapparatur auf 70 °C aufgeheizt. Anschließend wurde bei 70 °C innerhalb von 5 min ein Gemisch aus 53,7 g Hexamethylendiisocyanat und 71,0 g Isophorondiisocyanat zugegeben und bei 120°C gerührt, bis der theoretische NCO-Wert erreicht oder leicht unterschritten war. Das fertige Prepolymer wurde mit 1005 g Aceton gelöst und dabei auf 50 °C abgekühlt und anschließend wurde eine Lösung aus 5,70 Ethylendiamin, 26,4 g Isophorondiamin, 9,18 g Diaminosulfonat und 249,2 g Wasser innerhalb von 10 min zudosiert. Die Nachrührzeit betrug 10 min. Dann wurde durch Zugabe von 216 g Wasser dispergiert. Es folgte die Entfernung des Lösemittels durch Destillation im Vakuum.

Die erhaltene weiße Dispersion hatte nachfolgenden Eigenschaften:

| | |
|---|---|
| Feststoffgehalt: | 63% |
| Partikelgröße (LKS): | 495 nm |

### Beispiel 6: PUR-Dispersion (Komponente I)

987,0 g PolyTHF^{®} 2000, 375,4 g PolyTHF^{®} 1000, 761,3 g Desmophen^{®} C2200 und 44,3 g Polyether LB 25 wurden in einer Standard-Rührapparatur auf 70 °C aufgeheizt. Anschließend wurde bei 70 °C innerhalb von 5 min ein Gemisch aus 237,0 g Hexamethylendiisocyanat und 313,2 g Isophorondiisocyanat zugegeben und bei 120°C gerührt, bis der theoretische NCO-Wert erreicht oder leicht unterschritten war. Das fertige Prepolymer wurde mit 4830 g Aceton gelöst und dabei auf 50 °C abgekühlt und anschließend wurde eine Lösung aus 36,9g 1,4-Diaminobutan, 116,5 g Isophorondiamin, 61,7 g Diaminosulfonat und 1076 g Wasser innerhalb von 10 min zudosiert. Die Nachrührzeit betrug 10 min. Dann wurde durch Zugabe von 1210 g Wasser dispergiert. Es folgte die Entfernung des Lösemittels durch Destillation im Vakuum.

Die erhaltene weiße Dispersion hatte nachfolgenden Eigenschaften:

| | |
|---|---|
| Feststoffgehalt: | 59% |
| Partikelgröße (LKS): | 350 nm |

### Beispiel 7: PUR-Dispersion (Komponente I)

201,3 g PolyTHF^{®} 2000, 76,6 g PolyTHF^{®} 1000, 155,3 g Desmophen^{®} C2200, 2,50 g 1,4-Butandiol und 10,0 g Polyether LB 25 wurden in einer Standard-Rührapparatur auf 70 °C aufgeheizt. Anschließend wurde bei 70 °C innerhalb von 5 min ein Gemisch aus 53,7 g Hexamethylendiisocyanat und 71,0 g Isophorondiisocyanat zugegeben und bei 120°C gerührt, bis der theoretische NCO-Wert erreicht oder leicht unterschritten war. Das fertige Prepolymer wurde mit 1010 g Aceton gelöst und dabei auf 50 °C abgekühlt und anschließend wurde eine Lösung aus 5,70 Ethylendiamin, 26,4 g Isophorondiamin, 14,0 g Diaminosulfonat und 250 g Wasser innerhalb von 10 min zudosiert. Die Nachrührzeit betrug 10 min. Dann wurde durch Zugabe von 243 g Wasser dispergiert. Es folgte die Entfernung des Lösemittels durch Destillation im Vakuum.

Die erhaltene weiße Dispersion hatte nachfolgenden Eigenschaften:

| | |
|---|---|
| Feststoffgehalt: | 62% |
| Partikelgröße (LKS): | 566 nm |

### Beispiel 8: PUR-Dispersion (Komponente I)

201,3 g PolyTHF^{®} 2000, 76,6 g PolyTHF^{®} 1000, 155,3 g Desmophen^{®} C2200, 2,50 g Trimethylolpropan und 10,0 g Polyether LB 25 wurden in einer Standard-Rührapparatur auf 70 °C aufgeheizt. Anschließend wurde bei 70 °C innerhalb von 5 min ein Gemisch aus 53,7 g Hexamethylendiisocyanat und 71,0 g Isophorondiisocyanat zugegeben und bei 120°C gerührt, bis der theoretische NCO-Wert erreicht oder leicht unterschritten war. Das fertige Prepolymer wurde mit 1010 g Aceton gelöst und dabei auf 50 °C abgekühlt und anschließend wurde eine Lösung aus 5,70 Ethylendiamin, 26,4 g Isophorondiamin, 14,0 g Diaminosulfonat und 250 g Wasser innerhalb von 10 min zudosiert. Die Nachrührzeit betrug 10 min. Dann wurde durch Zugabe von 293 g Wasser dispergiert. Es folgte die Entfernung des Lösemittels durch Destillation im Vakuum.

Die erhaltene weiße Dispersion hatte nachfolgenden Eigenschaften:

| | |
|---|---|
| Feststoffgehalt: | 56% |
| Partikelgröße (LKS): | 440 nm |

### Beispiel 9: PUR-Dispersion (Komponente I)

1072 g PolyTHF^{®} 2000, 407,6 g PolyTHF^{®} 1000, 827 g Desmophen^{®} C2200 und 48,1 g Polyether LB 25 wurden in einer Standard-Rührapparatur auf 70 °C aufgeheizt. Anschließend wurde bei 70 °C innerhalb von 5 min ein Gemisch aus 257,4 g Hexamethylendiisocyanat und 340 g Isophorondiisocyanat zugegeben und bei 120°C gerührt, bis der theoretische NCO-Wert erreicht oder leicht unterschritten war. Das fertige Prepolymer wurde mit 4820 g Aceton gelöst und dabei auf 50 °C abgekühlt und anschließend wurde eine Lösung aus 27,3 g Ethylendiamin, 126,5 g Isophorondiamin, 67,0 g Diaminosulfonat und 1090 g Wasser innerhalb von 10 min zudosiert. Die Nachrührzeit betrug 10 min. Dann wurde durch Zugabe von 1180 g Wasser dispergiert. Es folgte die Entfernung des Lösemittels durch Destillation im Vakuum.

Die erhaltene weiße Dispersion hatte nachfolgenden Eigenschaften:

| | |
|---|---|
| Feststoffgehalt: | 60% |
| Partikelgröße (LKS): | 312 nm |

### Herstellung von Schaumpasten und mikroporösen Beschichtungen aus den PUR-Dispersionen der Beispiele 1-9.

Die hergestellten Schaumpasten wurden normalerweise als Haftstrich bzw. als Zwischenstrich auf Deckstrichen aus Einkomponenten Impraperm- und Impranil- Marken im Transferverfahren aufgebracht.

Zur Herstellung der Schaumpasten aus den PUR-Dispersionen der Beispiele 1-9 kommen z.B. folgende Geräte in Frage:

| | |
|---|---|
| z.B. | Hansa-Mischer |
| | Mondo-Mischer |
| | Oakes-Mixer |
| | Stork-Schaumgenerator |

Der Auftrag des Schaums erfolgte mittels Walzenrakel. Beim Auftragen des Nassschaums sollte der Rakelspalt zwischen 0,3mm und 0,5mm liegen. Die Schaumdichte sollte 300-600g/l betragen.

Bei der Einstellung des Kaschierwerkes entsprach der Abstand der beiden Walzen im allgemeinen der Gesamtdicke aus Substrat, Schaumnassauftrag und der Papierstärke.

Als Substrate für die Schaumbeschichtung sind Gewebe und Gewirke aus Baumwolle sowie Vliese aus Zellulosefasern und deren Mischungen geeignet. Die Substrate können sowohl gerauht als auch ungerauht eingesetzt werden. Die Beschichtung wurde vorzugsweise auf der nicht gerauhten Seite vorgenommen. Zur Herstellung von Bekleidungsartikeln sind Substrate von 140-200 g/m², für Schuhobermaterial bis 240 g/m² geeignet.

Zur Anfärbung von der Streichpasten aus den PUR-Dispersionen der Beispiele 1-9 können folgende Farbteige eingesetzt werden:

| | | |
|---|---|---|
| z.B. | Levanox Marken | ca.10% |
| | Levanyl Marken | ca.6% |
| | Isoversal WL | ca. 10% |
| | Euderm Marken | ca.12-15% |
| | Eukanol Marken | ca. 10% |

Bei der Pastenherstellung wurden die PUR-Dispersionen der Beispiele 1-9 mit ca.1% einer 25%igen Ammoniaklösung in einem ausreichend großen Gebinde vorgelegt.

Der pH-Wert erreichte dabei 7,5-8,5, um eine abschließende, schaumstabilisierende Verdickung vornehmen zu können.

Anschließend wurden dann 2,0-2,5% des Schaumstabilisators Stokal SR und zu 1,0-1,5% das Ammoniumstearat Stokal STA unter rühren mit einem der oben genannten Geräte zugesetzt.

Nach einer ersten Homogenisierung konnte anschließend gegebenenfalls eine gewünschte Pigmentierung vorgenommen werden.

Nach erfolgter Verteilung der Pigmente wurde mit ca. 1,0-1,5% der Melaminharzvernetzer Acrafix ML zugegeben.

Anschließend konnte bei einer Drehzahl von ca. 1500-2000 U/Min. das gewünschte Litergewicht eingestellt werden.

Unter weiterem Rühren wurden die erhaltenen Schäume durch Zugabe von Praestol^{®} 185 K schließlich koaguliert; durch die Koagulation blieb das Schaumvolumen unverändert (leichte Viskositätszunahme). Alternativ konnte die Zugabe von Praestol^{®} 185 K auch vor dem Aufschäumschritt erfolgen.

Gegebenenfalls wurde mit ca. 2,5% der Polyacrylsäure Mirox AM zum Schluss eine leichte Verdickung eingestellt, die die Stabilität des hergestellten Schaums sicherte.

Die Trocknung, bzw. Vernetzung des Schaums erfolgte in einem 3-Zonen Trockenkanal (Zone 1: 80 °C, Zone 2: 100 °C, Zone 3: 160°C).

Es wurden durchweg reinweiße Schäume mit guten mechanischen Eigenschaften und einer feinen mikroprösen Porenstruktur (Schaum Nr. 1-10) erhalten.

**Tabelle 1**

| | Menge [g] | | | | | |
|---|---|---|---|---|---|---|
| Schaum Nr. | Polyurethan-Dispersion (Beispiel) | Stokal^{®} STA | Stokal^{®} SR | Acrafix ML | Praestol^{®} 185 k | Euderm rot |
| 1 | 1000,0 (1) | 15 | 20 | 20 | 30 | |
| 2 | 1000,0(1) | 15 | 20 | 20 | 30 | 50 |
| 3 | 1000,0 (2) | 15 | 20 | 20 | 10 | |
| 4 | 1000,0 (3) | 15 | 20 | 20 | 10 | |
| 5 | 235,0 (4) | 4,2 | 5,6 | 5,6 | 5,0 | |
| 6 | 235,0 (5) | 4,2 | 5,6 | 5,6 | 5,0 | |
| 7 | 235,0 (6) | 4,2 | 5,6 | 5,6 | 5,0 | |
| 8 | 235,0 (7) | 4,2 | 5,6 | 5,6 | 5,0 | |
| 9 | 235,0 (8) | 4,2 | 5,6 | 5,6 | 5,0 | |
| 10 | 235,0 (9) | 4,2 | 5,6 | 5,6 | 5,0 | |
| 11 (Vgl.) | 1000,0 (1) | 15 | 20 | 20 | 0,0 | 50 |

Die Schäume 1-10 weisen alle eine mikropöse Struktur auf. Wird auf das Koagulanz verzichtet (Rezeptur Schaum 11) erhält man einen geschlossenzelligen, nicht mikroprösen Schaum.

## Patentansprüche

1. Verfahren zur Herstellung von mikroporösen Beschichtungen, bei dem eine Zusammensetzung enthaltend eine wässrige, anionisch hydrophilierte Polyurethan-Dispersionen (I) und ein kationisches Koagulanz (II) aufgeschäumt und getrocknet wird, wobei das Koagulanz (II) eine mindestens zwei kationische Gruppen enthaltende organische Verbindung ist.

2. Verfahren gemäß Anspruch 1, **dadurch gekennzeichnet, dass** die wässrigen, anionisch hydrophilierten Polyurethan-Dispersionen (I) erhältlich sind, indem
A) isocyanatfunktionelle Prepolymere aus
A1) organischen Polyisocyanaten
A2) polymeren Polyolen mit zahlenmittleren Molekulargewichten von 400 bis 8000 g/mol und OH-Funktionalitäten von 1,5 bis 6 und
A3) gegebenenfalls hydroxyfunktionellen Verbindungen mit Molekulargewichten von 62 bis 400 g/mol und
A4) gegebenenfalls isocyanatreaktiven, anionischen oder potentiell anionischen und gegebenenfalls nichtionischen Hydrophilierungsmitteln,
hergestellt werden,
B) dessen freie NCO-Gruppen anschließend ganz oder teilweise
B1) mit aminofunktionellen Verbindungen mit Molekulargewichten von 32 bis 400 g/mol und/oder
B2) aminofunktionellen, anionischen oder potentiell anionischen Hydrophilierungsmitteln
unter Kettenverlängerung umgesetzt werden und die Prepolymere vor, während oder nach Schritt B) in Wasser dispergiert werden, wobei gegebenenfalls enthaltene potentiell ionische Gruppen durch teilweise oder vollständige Umsetzung mit einem Neutralisationsmittel in die ionische Form überführt werden.

3. Verfahren gemäß Anspruch 2, **dadurch gekennzeichnet, dass** bei der Herstellung der wässrigen, anionisch hydrophilierten Polyurethan-Dispersionen (I) in A1) 1,6-Hexamethylendiisocyanat, Isophorondiisocyanat, die isomeren Bis-(4,4'-isocyanatocyclohexyl)methane, sowie deren Mischungen eingesetzt werden und in A2) eine Mischung aus Polycarbonatpolyolen und Polytetramethylenglykolpolyolen eingesetzt wird, wobei der Anteil der Summe der Polycarbonat- und Polytetramethylenglykolpolyetherpolyole an der Komponente A2) mindestens 70 Gew.-% beträgt.

4. Verfahren gemäß einem der Ansprüche 1 bis 3, **dadurch gekennzeichnet, dass** das kationische Koagulans (II) ein Polymer mit einem zahlenmittleren Molekulargewicht von 500.000 bis 50.000.000 g/mol ist, welches Struktureinheiten der allgemeinen Formeln (1) und (2) aufweist 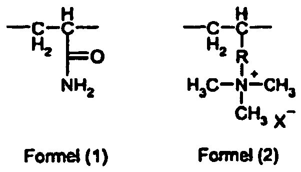 wobei
R C=O, -COO(CH₂)₂- oder -COO(CH₂)₃- und
X⁻ ein Halogenidion ist

5. Verfahren gemäß einem der Ansprüche 1 bis 4, **dadurch gekennzeichnet, dass** neben der Polyurethan-Dispersion (I) und dem kationisches Koagulans (II) auch Hilfs- und Zusatzstoffe (III) enthalten sind.

6. Verfahren gemäß Anspruch 5, **dadurch gekennzeichnet, dass** als Hilfs- und Zusatzstoffe (III) wasserlösliche Fettsäureamide, Sulfosuccinamide, Kohlenwasserstoffsulfonate, Kohlenwasserstoffsulfate oder Fettsäuresalze als Schaumbildner und Schaumstabilisatoren enthalten sind.

7. Verfahren gemäß Anspruch 6, **dadurch gekennzeichnet, dass** als Schaumbildner und Schaumstabilisatoren Mischungen aus Sulfosuccinamiden und Ammoniumstearaten verwendet werden, wobei diese 70 bis 50 Gew.-% an Sulfosuccinamiden enthalten.

8. Mikroporöse Beschichtungen erhältlich nach einem Verfahren gemäß einem der Ansprüche 1 bis 7.

9. Mikroporöse Beschichtungen gemäß Anspruch 8, **dadurch gekennzeichnet, dass** diese eine mikroporöse, offenporige Struktur aufweisen und eine Dichte in getrocknetem Zustand von 0,3-0,7 g/cm³ aufweisen.

10. Zusammensetzungen enthaltend eine wässrige, anionisch hydrophilierte Polyurethan-Dispersionen (I) und ein kationisches Koagulanz (II), wobei das Koagulanz (II) eine mindestens zwei kationische Gruppen enthaltende organische Verbindung ist.

11. Mit mikroporösen Beschichtungen gemäß Ansprüchen 8 und 9 beschichtete Substrate.

12. Substrate gemäß Anspruch 11 ausgewählt aus der Gruppe bestehend aus Oberbekleidung, Kunstlederartikeln, Schuhen, Möbelbezugsstoffen, Automobil-Innenausstattungsartikeln, Sportgeräten.

## Claims

1. Process for producing microporous coatings which comprises a composition containing an aqueous, anionically hydrophilicized polyurethane dispersion (I) and a cationic coagulant (II) being foamed and dried, wherein the coagulant (II) is an organic compound containing at least two cationic groups.

2. Process according to Claim 1, **characterized in that** the aqueous, anionically hydrophilicized polyurethane dispersions (I) are obtainable by
A) isocyanate-functional prepolymers being produced from
A1) organic polyisocyanates
A2) polymeric polyols having number average molecular weights in the range from 400 to 8000 g/mol and OH functionalities in the range from 1.5 to 6 and
A3) optionally hydroxyl-functional compounds having molecular weights in the range from 62 to 400 g/mol and
A4) optionally isocyanate-reactive, anionic or potentially anionic and optionally nonionic hydrophilicizing agents,
and
B) its free NCO groups then being wholly or partly reacted
B1) with amino-functional compounds having molecular weights in the range from 32 to 400 g/mol and
B2) amino-functional, anionic or potentially anionic hydrophilicizing agents
by chain extension, and the prepolymers being dispersed in water before, during or after step B), any potentially ionic groups present being converted into the ionic form by partial or complete reaction with a neutralizing agent.

3. Process according to Claim 2, **characterized in that** the aqueous, anionically hydrophilicized polyurethane dispersions (I) are produced using in A1) 1,6-hexamethylene diisocyanate, isophorone diisocyanate, the isomeric bis(4,4'-isocyanatocyclohexyl)methanes, and also mixtures thereof, and in A2) a mixture of polycarbonate polyols and polytetramethylene glycol polyols, the proportion of component A2) which is contributed by the sum total of the polycarbonate and polytetramethylene glycol polyether polyols being at least 70% by weight.

4. Process according to any one of Claims 1 to 3, **characterized in that** the cationic coagulant (II) is a polymer having a number average molecular weight in the range from 500 000 to 50 000 000 g/mol and comprising structural units of the general formulae (1) and (2) 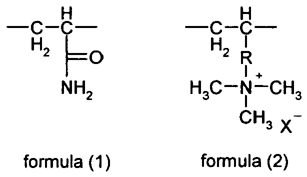 where
R is C=O, -COO(CH₂)₂- or -COO(CH₂)₃- and
X⁻ is a halide ion.

5. Process according to any one of Claims 1 to 4, **characterized in that** auxiliary and additive materials (III) are included as well as the polyurethane dispersion (I) and the cationic coagulant (II).

6. Process according to Claim 5, **characterized in that** as auxiliary and additive materials (III) there are included water-soluble fatty acid amides, sulphosuccinamides, hydrocarbyl sulphonates, hydrocarbyl sulphates or fatty acid salts as foam formers and foam stabilizers.

7. Process according to Claim 6, **characterized in that** mixtures of sulphosuccinamides and ammonium stearates are used as foam formers and foam stabilizers, these mixtures containing 70% to 50% by weight of sulphosuccinamides.

8. Microporous coatings obtainable by a process according to any one of Claims 1 to 7.

9. Microporous coatings according to Claim 8, **characterized in that** they have a microporous, open-cell structure and a density of 0.3-0.7 g/cm³ in the dried state.

10. Compositions containing an aqueous, anionically hydrophilicized polyurethane dispersion (I) and a cationic coagulant (II), wherein the coagulant (II) is an organic compound containing at least two cationic groups.

11. Substrates coated with microporous coatings according to Claims 8 and 9.

12. Substrates according to Claim 11 selected from the group consisting of outerwear clothing, artificial leather articles, shoes, furniture coverings, automotive interior trim articles, sports implements.

## Revendications

1. Procédé pour la production de revêtements microporeux, dans lequel on transforme en mousse et sèche une composition contenant une dispersion aqueuse de polyuréthane rendu hydrophile par voie anionique (I) et un coagulant cationique (II), le coagulant (II) étant un composé organique contenant au moins deux groupes cationiques.

2. Procédé selon la revendication 1, **caractérisé en ce que** les dispersions aqueuses de polyuréthane rendu hydrophile par voie anionique (I) peuvent être obtenues par
A) préparation de prépolymères à fonction isocyanate à partir
A1) de polyisocyanates organiques
A2) de polyols polymères ayant des masses moléculaires moyennes en nombre de 400 à 8 000 g/mole et des fonctionnalités OH de 1,5 à 6 et
A3) éventuellement de composés à fonction hydroxy ayant des masses moléculaires de 62 à 400 g/mole et
A4) éventuellement d'agents d'hydrophilisation anioniques ou potentiellement anioniques et éventuellement non ioniques, réactifs avec des isocyanates,
B) dont on fait ensuite réagir en partie ou en totalité les groupes NCO libres
B1) avec des composés à fonction amino, ayant des masses moléculaires de 32 à 400 g/mole et/ou
B2) des agents d'hydrophilisation anioniques ou potentiellement anioniques, à fonction amino,
avec prolongement de chaîne, et avant, pendant ou après l'étape B) les prépolymères sont dispersés dans de l'eau, des groupes potentiellement ioniques éventuellement contenus étant convertis en la forme ionique par réaction partielle ou totale avec un agent de neutralisation.

3. Procédé selon la revendication 2, **caractérisé en ce que** dans la préparation des dispersions aqueuses de polyuréthane rendu hydrophile par voie anionique (I) on utilise en A1) le 1,6-hexaméthylène-diisocyanate, l'isophorone-diisocyanate, les bis-(4,4'-isocyanatocyclohexyl)méthanes isomères, ainsi que des mélanges de ceux-ci et en A2) un mélange de polycarbonate-polyols et de polytétraméthylèneglycol-polyols, la proportion de la somme des polycarbonate- et polytétraméthylèneglycolpolyéther-polyols du composant A2) étant d'au moins 70 % en poids.

4. Procédé selon l'une quelconque des revendications 1 à 3, **caractérisé en ce que** le coagulant cationique (II) est un polymère ayant une masse moléculaire moyenne en nombre de 500 000 à 50 000 000 g/mole, qui comporte des motifs structuraux de formules générales (1) et (2) 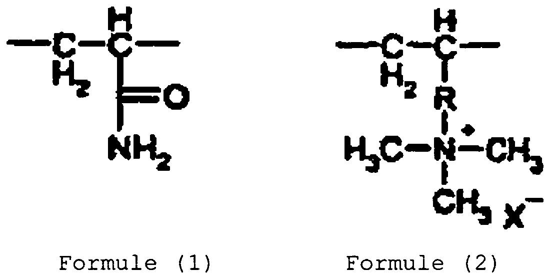 où
R est C=O, -COO(CH₂)₂- ou -COO(CH₂)₃- et
X⁻ est un ion halogénure.

5. Procédé selon l'une quelconque des revendications 1 à 4, **caractérisé en ce qu'**en plus de la dispersion de polyuréthane (I) et du coagulant cationique (II) sont également contenus des additifs et adjuvants (III).

6. Procédé selon la revendication 5, **caractérisé en ce que** comme additifs et adjuvants (III) sont contenus des amides d'acides gras, sulfosuccinamides, sulfonates d'hydrocarbures, sulfates d'hydrocarbures, ou des sels d'acides gras, hydrosolubles, en tant que générateurs de mousse et stabilisants de mousse.

7. Procédé selon la revendication 6, **caractérisé en ce que** comme générateurs de mousse et stabilisants de mousse on utilise des mélanges de sulfosuccinamides et stéarates d'ammonium, ces mélanges contenant de 70 à 50 % en poids de sulfosuccinamides.

8. Revêtements microporeux pouvant être obtenus conformément à un procédé selon l'une quelconque des revendications 1 à 7.

9. Revêtements microporeux selon la revendication 8, **caractérisés en ce qu'**ils présentent une structure microporeuse à pores ouverts et ont une densité à l'état séché de 0,3-0,7 g/cm³.

10. Compositions, contenant une dispersion aqueuse de polyuréthane rendu hydrophile par voie anionique (I) et un coagulant cationique (II), le coagulant (II) étant un composé organique contenant au moins deux groupes cationiques.

11. Substrats revêtus avec des revêtements microporeux selon les revendications 8 et 9.

12. Substrats selon la revendication 11, choisis dans le groupe constitué par les vêtements, articles en cuir synthétique, chaussures, tissus d'ameublement, articles d'équipement intérieur d'automobiles, articles de sport.
